Europäisches Patentamt

European Patent Office

Office européen des brevets

(11) Veröffentlichungsnummer: **0 379 672**
**A1**

(12) **EUROPÄISCHE PATENTANMELDUNG**

(21) Anmeldenummer: **89121733.3**

(22) Anmeldetag: **24.11.89**

(51) Int. Cl.5: **A01B 29/04**

(30) Priorität: **23.12.88 DE 8815961 U**
**07.03.89 DE 8902722 U**

(43) Veröffentlichungstag der Anmeldung:
**01.08.90 Patentblatt 90/31**

(84) Benannte Vertragsstaaten:
**DE FR NL**

(71) Anmelder: **Rabewerk GmbH + Co.**

**D-4515 Bad Essen(DE)**

(72) Erfinder: **Warnking, Richard, Dipl.-Ing.**
**Klockenpatt 5**
**D-4515 Bad Essen(DE)**

(74) Vertreter: **Missling, Arne, Dipl.-Ing.**
**Patentanwalt Bismarckstrasse 43**
**D-6300 Giessen(DE)**

(54) **Ackerwalze.**

(57) Die Erfindung bezieht sich auf eine Ackerwalze mit einem starren Traggerüst (1) und einem dieses umschließenden elastischen Mantel (2). Um eine sichere Selbstreinigung der Ackerwalze zu gewährleisten und um diese für verschiedenste Böden verwendbar zu machen, ist erfindungsgemäß vorgesehen, daß der Mantel (2) zumindest in einem Teilbereich seiner Länge in radialer Richtung verformbar ausgebildet ist und daß das Traggerüst (1) mit im wesentlichen ringförmigen Stützelementen (3) zur seitlichen und/oder radialen Abstützung versehen ist.

Fig 1

## Ackerwalze

Die Erfindung bezieht sich auf eine Ackerwalze mit einem starren Traggerüst und einem dieses umschließenden, sich zumindest über einen Teil der Gesamtlänge der Walze erstreckenden elastischen Mantel.

Eine Ackerwalze der genannten Art ist aus der DE-OS 19 22 313 bekannt. Bei dieser Ackerwalze ist ein zylindrischer Körper vorgesehen, welcher von einem elastischen Band umgeben wird, welches einen größeren Durchmesser aufweist, als der zylindrische Walzenkörper. Letzterer rollt am Innenumfang des elastischen, zylindrischen Bandes. Dabei tritt kein Walken des elastischen Bandes auf. Weiterhin sind Ausführungsformen bekannt, bei welchen der zylindrische Körper mit Längsstegen versehen ist, auf denen das elastische Band aufliegt. Beim Abrollen der Walze kann das elastische Band in die Längsausnehmungen zwischen den Stegen eintreten und dabei verformt werden. Als nachteilig bei diesen Ausführungsformen erweist sich, daß das elastische Band nicht oder nur in ungenügendem Zustand eine Walkbewegung ausführt. Es ist damit nicht sichergestellt, daß der elastische Mantel in ausreichender Weise während des Walzvorganges von anhaftendem Erdreich befreit wird.

Aus der GB-PS 739 871 ist eine Ackerwalze bekannt, welche aus einzelnen Fahrzeugreifen ausgebildet ist, zwischen welchen zylindrische Abstandselemente angeordnet sind. Bei dieser Walze kann kein ausreichender Selbstreinigungseffekt auftreten.

Die DE-OS 37 05 952 zeigt eine Bodenwalze, welche aus einzelnen, nebeneinander angeordneten Fahrzeugreifen aufgebaut ist, in welchen sich jeweils eine starre Abstützung befindet. Auch bei diesen Reifen ist nicht sichergestellt, daß eine Selbstreinigung stattfindet, insbesondere führen die Zwischenräume zwischen den einzelnen Reifen zu erheblichen Materialanhäufungen. Die EP-A1-91 878 zeigt eine Ackerwalze, welche in Form einer Stabwalze ausgebildet ist, in deren Innerem ein Luftschlauch angeordnet ist, welcher beim Abrollen der Walze verformt wird. Besonders bei Vorhandensein von Steinen ist sie ungeeignet.

Bei den bekannten Ackerwalzen besteht generell das Problem, daß insbesondere beim Walzen von feuchtem Erdreich erhebliche Mengen von Erdreich an der Walze anhaften, vor allem zwischen benachbarten Reifen, wodurch sich zum einen die Notwendigkeit ergibt, die Walze in regelmäßigen Abständen zu reinigen, sei es unter Verwendung eines Abstreifers oder ähnlichen oder manuell, und wodurch zum anderen eine ausreichende Bodenbearbeitung verhindert wird. Es sind deshalb Walzen bekanntgeworden, bei welchen eine Ummantelung oder ein Mantel vorgesehen ist, welcher sich beim Abrollen der Walze verformt, so daß das anhaftende Erdreich selbsttätig abgesprengt wird. Bei den be kannten Ackerwalzen erfolgt jedoch entweder keine ausreichende Walkung des Mantels, um unter allen Betriebsbedingungen eine selbständige Reinigung zu gewährleisten, oder es sammelt sich Erdreich in Zwischenräumen zwischen den Walzenkörpern an, welches zusätzlich entfernt werden muß.

Der Erfindung liegt die Aufgabe zugrunde, eine Ackerwalze der eingangs genannten Art zu schaffen, welche bei einfachem Aufbau und betriebssicherer Wirkungsweise eine sichere Selbstreinigung gewährleistet und unter den verschiedensten Betriebsbedingungen und für verschiedenste Böden verwendbar ist.

Erfindungsgemäß wird die Aufgabe dadurch gelöst, daß der Mantel zumindest in einem Teilbereich seiner Länge in radialer Richtung verformbar ausgebildet ist und daß das Traggerüst mit im wesentlichen ringförmigen Stützelementen zur seitlichen und/oder radialen Abstützung versehen ist.

Die erfindungsgemäße Ackerwalze zeichnet sich durch eine Reihe erheblicher Vorteile aus. Da der Mantel in radialer Richtung verformbar ist, erfolgt beim Abrollen der Walze eine gleichmäßige, nicht durch querverlaufende Rippen oder Stege gestörte Verformung des Mantels, so daß vermieden wird, daß einzelne Bereiche des Mantels nicht ausreichend gewalkt und damit nicht in erforderlicher Weise verformt werden. Erfindungsgemäß ergibt sich somit die Möglichkeit, die gesamte Walzenfläche, bezogen auf den jeweiligen Umfang, elastisch auszugestalten und verformbar zu halten. Ein weiterer, wesentlicher Vorteil der Erfindung liegt darin, daß das Traggerüst eine sichere Abstützung des Mantels gewährleistet, da dieser sowohl seitlich als auch radial führbar ist. Die bei einigen aus dem Stand der Technik bekannten Ackerwalzen auftretenden Nach teile, daß die Walze nämlich, bedingt durch die seitliche Verformung des Mantels seitlich abrutschen oder aus ihrer Fahrrichtung gelangen kann, können erfindungsgemäß nicht auftreten. Es ist somit möglich, die Ackerwalze auch bei geneigtem Gelände exakt hinter dem Schlepper zu führen.

Ein weiterer, wesentlicher Vorteil der erfindungsgemäßen Ackerwalze besteht darin, daß der Mantel in gleichmäßiger Weise verformbar ist, so daß Spannungsspitzen oder Knicke vermieden werden können, welche zu einer Beschädigung des Mantels und zu einer Verkürzung seiner Lebensdauer führen könnten.

In einer besonders günstigen Ausgestaltung der Erfindung ist vorgesehen, daß der Mantel mit zumindest einer radial über den Umfang der Walze vorstehenden Ringwulst versehen ist. Alternativ dazu kann es auch besonders günstig sein, daß das Traggerüst zumindest einen radial vorstehenden, eine radial Verformung des Mantels begrenzenden Stützring umfaßt. Bei diesen Ausgestaltungsformen wird jeweils erreicht, daß mittels der Walze eine Rille in die Erdoberfläche gedrückt wird, welche beispielsweise zur Aufnahme von Saatgut dienen kann. Weiterhin vergrößern diese Rillen die Seitenführung der Walze, so daß erreicht wird, daß diese exakt der durch die Schlepperbewegung vorgegebenen Bahn folgt.

Es kann sich erfindungsgemäß auch als günstig erweisen, wenn das Traggerüst in einem nicht mit dem Mantel belegten Längenbereich mit einer radial vorstehenden Ringrippe versehen ist. Diese Ausgestaltungsform weist den Vorteil auf, daß der Mantel selbst geometrisch einfach und kostengünstig ausgestaltet werden kann und daß die Ringrippe zugleich dazu dienen kann, den Zwischenraum zwischen benachbarten Mänteln, welche sich jeweils nur über einen Teil der Gesamtlänge der Walze erstrecken, auszufüllen, so daß ein Eindringen von Erdreich in diesen Zwischenraum vermieden wird.

Um die erfindungsgemäße Ackerwalze möglichst einfach ausgestalten zu können und um ein gleichmäßiges Walken des Mantels sicherzustellen, kann dieser in einer bevorzugten Ausführungsform im wesentlichen in Form einer Zylinderschale ausgebildet sein.

Die erfindungsgemäße Ackerwalze bietet die Möglichkeit, den Mantel so auszugestalten, daß sich dieser über die gesamte Länge der Walze erstreckt. Es ist jedoch auch möglich, mehrere einzelne Mäntel vorzusehen, welche sich jeweils nur über einen Teil der Gesamtlänge der Walze erstrecken.

Um das Traggerüst möglichst einfach und störungsunanfällig ausbilden zu können, kann vorgesehen sein, daß dieses im wesentlichen zylinderisch ausgestaltet ist und im mittleren Bereich, bezogen auf die Breite des jeweiligen Mantels, mit einer radialen Ausnehmung versehen ist, in welche ein Teilbereich des Mantels eindringen kann, wenn er beim Abrollen der Walze verformt wird.

In einer weiteren, vorteilhaften Ausgestaltung der Erfindung kann vorgesehen sein, daß der Mantel doppelwandig ausgebildet ist und an seinem mittleren, radial inneren Bereich an dem Traggerüst gehaltert ist. Die doppelwandige Ausgestaltung des Mantels eröffnet die Möglichkeit, diesen als selbständiges, in sich stabiles Element auszubilden und unter Verwendung eines relativ einfach ausgestalteten Traggerüstes mehrere derartige Mäntel zu einer Ackerwalze zu kombinieren. Weiterhin besteht die Möglichkeit, in dem durch die doppelwandige Ausbildung geschaffenen Zwischenraum ein Gas oder eine Flüssigkeit einzuschließen, um auf diese Weise das Walk- und/oder Abrollverhalten des Mantels zu beeinflussen.

In einer anderen Ausgestaltung der Erfindung ist es günstig, wenn der Mantel in seinem mittleren Bereich konvex radial nach außen geformt ist. Dabei liegen die beiden Flanken des Mantels im unverformten Zustand an dem Mantel an, und der mittlere Bereich des Mantels wird beim Abrollen radial nach innen verformt und gegen das Traggerüst gedrückt.

Bei der erfindungsgemäßen Ackerwalze kann in einer weiteren Ausgestaltungsform auch vorgesehen sein, daß der Mantel im unverformten Zustand einen größeren Durchmesser als das Traggerüst aufweist und zwischen dem Mantel und dem Traggerüst ein Freiraum wechselnder Dicke gebildet wird. Da erfindungsgemäß der Mantel über die gesamte Umfangsfläche verformt werden kann, wird verhindert, daß das Tragegerüst lediglich am Innenumfang des Mantels abrollt, ohne daß dieser eine Walkbewegung durchführt.

Um auch bei weniger elastischen Materialien und/oder Querschnitten des Mantels ein ausreichendes Walken sicherzustellen, wird es sich, besonders beim vorliegenden Beispiel, als günstig erweisen, wenn das Tragegerüst zumindest über einen Teil seiner Länge mit einem vieleckigen Querschnitt versehen ist. So kann beispielsweise ein achteckiger Querschnitt gewählt werden, dessen Kanten die Abrollbewegung der Ackerwalze nicht beeinträchtigen, jedoch das Walken des Mantels fördern.

Erfindungsgemäß kann es weiterhin günstig sein, die Ringrippe des Traggerüstes oder des Mantels nicht mit einem gleichbleibenden Durchmesser zu versehen, sondern in Form einer Wellenlinie oder ähnlichem auszubilden, um beim Abrollen der Ackerwalze eine unterbrochene Rille in die Erdoberfläche zu drücken. Dies kann sich beispielsweise bei hängigem Gelände als günstig erweisen, da dann verhindert wird, daß Rillen gebildet werden, durch welche Regenwasser ablaufen und zu Erosionserscheinungen führen kann. Diese Ausgestaltung ist insbesondere dann günstig, wenn die in das Erdreich eingebrachten Rillen nicht zur Einbringung von Saatgut verwendet werden sollen.

Eine weitere, besonders vorteilhafte Ausgestaltungsform der erfindungsgemäßen Ackerwalze zeichnet sich dadurch aus, daß das Traggerüst mehrere, im wesentlichen zylindrische Segmente umfaßt, deren Außendurchmesser kleiner ist als der Innendurchmesser des Mantels und daß im Bereich zwischen den Segmenten und dem Mantelring Elemente angeordnet sind, deren Durchmesser vergrößerbar ist. Es ist somit möglich, den Mantel auf besonders einfache Weise an dem Traggerüst zu montieren und durch nachfolgendes Spreizen der Ringelemente bzw. durch Vergrößern von deren Durchmesser einen klemmenden Sitz des Mantels auf dem Traggerüst zu erzielen. Dabei sind die Ringelemente bevorzugterweise in Form elastischer Ringe ausgebildet und so angeordnet, daß diese zwischen benachbarten Segmenten, deren axiale Endbereiche abgeschrägt sind, gequetscht werden können. Dadurch ist es möglich, durch axiale Annäherung der Segmente die Ringelemente, welche bevorzugterweise einen kreisförmigen Durchmesser aufweisen, nach außen zu quetschen. Um auch in einem Montagezustand, d.h. dann, wenn die Segmente axial zueinander einen größeren Abstand aufweisen, eine axiale Führung der Segmente sicherzustellen, sind diese bevorzugterweise aneinandergeführt.

Im folgenden wird die Erfindung anhand von Ausfüh rungsbeispielen in Verbindung mit der Zeichnung beschrieben. Dabei zeigt:

Fig. 1 eine Teil-Schnittansicht eines ersten Ausführungsbeispiels der erfindungsgemäßen Akkerwalze;

Fig. 2 eine Teil-Schnittansicht eines weiteren Ausführungsbeispiels;

Fig. 3 ein weiteres Ausführungsbeispiel der Ackerwalze mit einer Ringrippe;

Fig. 4 ein weiteres Ausführungsbeispiel ähnlich dem in Fig. 3 gezeigten Ausführungsbeispiel;

Fig. 5 eine Schnittansicht eines weiteren Ausführungsbeispiels der erfindungsgemäßen Akkerwalze, bei welchem der Mantel einen größeren Innendurchmesser aufweist, als das Traggerüst;

Fig. 6 eine schematische Seitenansicht eines Traggerüstes zur Verwendung bei dem in Fig. 5 gezeigten Ausführungsbeispiel;

Fig. 7 eine schematische Schnittansicht eines weiteren Ausführungsbeispiels der erfindungsgemäßen Ackerwalze;

Fig. 8 ein weiteres Ausführungsbeispiel, ähnlich Fig. 7;

Fig. 9 ein weiteres Ausführungsbeispiel der Ackerwalze, ähnlich den in den Fig. 7 und 8 gezeigten Ausführungsbeispielen;

Fig. 10 ein weiteres Ausführungsbeispiel der erfindungsgemäßen Ackerwalze;

Fig. 11 eine schematische Seitenansicht eines Ausführungsbeispiels des erfindungsgemäßen Mantels;

Fig. 12 eine schematische Schnittansicht eines weiteren Ausführungsbeispiels, bei welchem das Traggerüst Stützringe größeren Durchmessers aufweist; und

Fig. 13 eine schematische Schnittansicht eines weiteren Ausführungsbeispiels der erfindungsgemäßen Ackerwalze.

In den Figuren ist die erfindungsgemäße Akkerwalze jeweils in schematischer Weise im Längsschnitt dargestellt, wobei in den Abbildungen auf die Lagerung der Ackerwalze und die damit zusammenhängenden Einzelteile der Aufhängung usw. verzichtet wurde.

In den gezeigten Ausführungsbeispielen umfaßt die Ackerwalze jeweils ein Traggerüst 1, welches von einem Mantel 2 umgeben ist, welcher aus einem elastischen Material geformt ist und beim Abrollen der Ackerwalze walkend verformt wird.

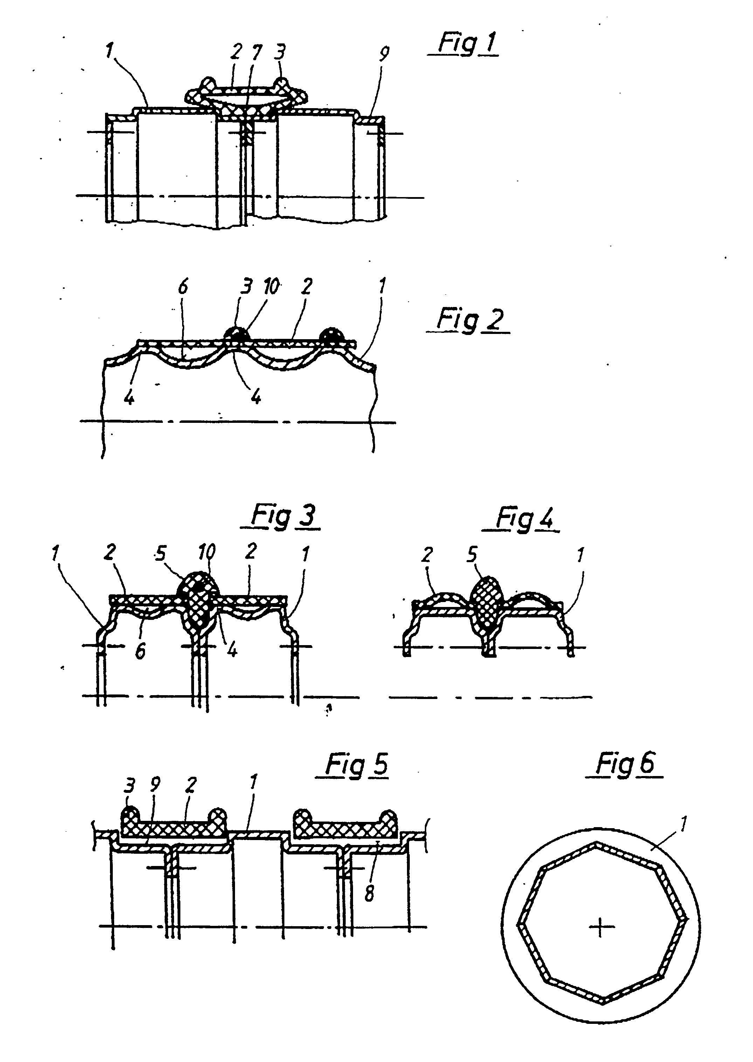

Bei dem Ausführungsbeispiel gemäß Fig. 1 ist das Traggerüst 1 in Form mehrerer radförmiger, im wesentlichen zylindrischer Segmente ausgebildet, welche miteinander verschraubt sind. An den Verbindungsbereichen weisen die Traggerüste jeweils seitliche Einprägungen 9 auf, in welche ein zentrischer Bereich 7 des Mantels 2 eingesetzt ist. Durch die Verschraubung der benachbarten Traggerüste 1 wird der Mantel 2 in seiner Position gehalten. Der Mantel 2 ist doppelwandig in Form eines Schlappreifens ausgebildet und weist an seinem Außenumfang zwei ringförmige Ringwülste 3 auf, welche sich über den gesamten Umfang erstrecken. Es ist möglich, den Mantel 2 zusammen mit den Ringwülsten 3 einstückig herzustellen, die Ringwülste 3 können jedoch auch nachträglich aufvulkanisiert oder aufgeklebt werden.

In den Figuren ist jeweils der obere Bereich der Ackerwalze dargestellt, welcher sich in einem nichtverformten Zustand befindet. Bei einem Aufstehen der Ackerwalze auf einem Erdboden wird jeweils der entsprechende Bereich des Mantels elastisch verformt, bei dem in Fig. 1 gezeigten Ausführungsbeispiel so, daß der Zwischenraum der doppelwandigen Ausführung geschlossen wird.

Das in Fig. 2 gezeigte Ausführungsbeispiel weist eine im wesentlichen zylindrische Traggerüstausgestaltung auf, wobei die zylindrischen Bereiche jeweils Stützringe 4 bilden, auf welchen der Mantel 2 mit seinen Randbereichen anliegt. Im mittleren Bereich des Mantels 2 sind jeweils radiale Ausnehmungen 6 vorgesehen, in welche der Mantel 2 beim Abrollen eindringt, wenn die Ackerwalze auf dem Boden aufliegt.

Wie weiterhin in Fig. 2 dargestellt, ist an den Randbereichen der Mäntel 2 jeweils eine Ringwulst 3 ausgebildet, welche um den Umfang umlaufend radial über die durch den Mantel 2 gebildete Zylinderfläche hervorsteht. Zur Erhöhung der Stabilität der Ringwulst 3 ist in diese ein Metallring 10 eingelegt. Bei dem Ausführungsbeispiel ist jeweils an einem Mantelelement 2 eine Ringwulst 3 ausgebildet, welche in den benachbarten Mantel zum Teil übergreift.

Bei dem in den Fig. 3 und 4 gezeigten Ausführungsbeispiel ist zwischen benachbarten Mänteln 2 jeweils eine Ringrippe 5 vorgesehen, welche, wie in Fig. 3 gezeigt, zur Versteifung einen Metallring 10 umfassen kann. Die Ringrippe 5 ist zwischen benachbarten Traggerüst-Elementen 1 geklemmt.

Bei dem in Fig. 3 gezeigten Ausführungsbeispiel weisen die Traggerüst-Elemente 1 jeweils, ähnlich wie bei dem in Fig. 2 gezeigten Ausführungsbeispiel eine radiale Ausnehmung 6 auf, während der Mantel 2 zylindrisch ausgebildet ist. Bei dem Ausführungsbeispiel gemäß Fig. 4 sind die Traggerüst-Elemente 1 an ihrem Außenumfang zylindrisch ausgebildet, während die jeweiligen Mäntel in ihrem mittleren Bereich konvex nach außen gebogen sind.

Beim Abrollen der in Fig. 3 gezeigten Ackerwalze werden die mittleren Bereiche der Mäntel 2 so verformt, daß sich diese in die radialen Ausnehmungen 6 einlegen, während die Verformung bei dem Ausführungsbeispiel gemäß Fig. 4 dadurch erfolgt, daß der mittlere Bereich des Mantels 2 gegen die Außenwandung des Traggerüstes 1 angedrückt wird.

In Fig. 5 ist ein Ausführungsbeispiel gezeigt, bei welchem die Mäntel jeweils in Form von Ringelementen ausgebildet sind und einen Innendurchmesser aufweisen, welcher größer ist, als der Außendurchmesser des zugehörigen Bereichs des Traggerüsts 1, so daß zwischen dem Mantel und dem Traggerüst 1 ein Freiraum 8 gebildet wird. Die einzelnen Traggerüst-Elemente sind, ähnlich wie bei dem in Fig. 1 gezeigten Ausführungsbeispiel mit einer Rand-Einprägung 9 versehen, welche einen geringeren Durchmesser aufweist, so daß der Mantel 2 durch die benachbarten, gegeneinander verschraubten Traggerüst-Elemente 1 gehalten wird.

In Fig. 6 ist eine Seitenansicht eines Ausführungs beispiels der Ackerwalze dargestellt, bei welcher das Traggerüst 1 in Form eines gleichseitigen Vielecks ausgebildet ist. Diese Form kann beispielsweise bei einem Mantel der in Fig. 5 gezeigten Ausgestaltungsform angewandt werden, um auch bei einem größeren Querschnitt des Mantels 2 eine gleichmäßige Verformung und damit ein gleichmäßiges Abwalken sicherzustellen.

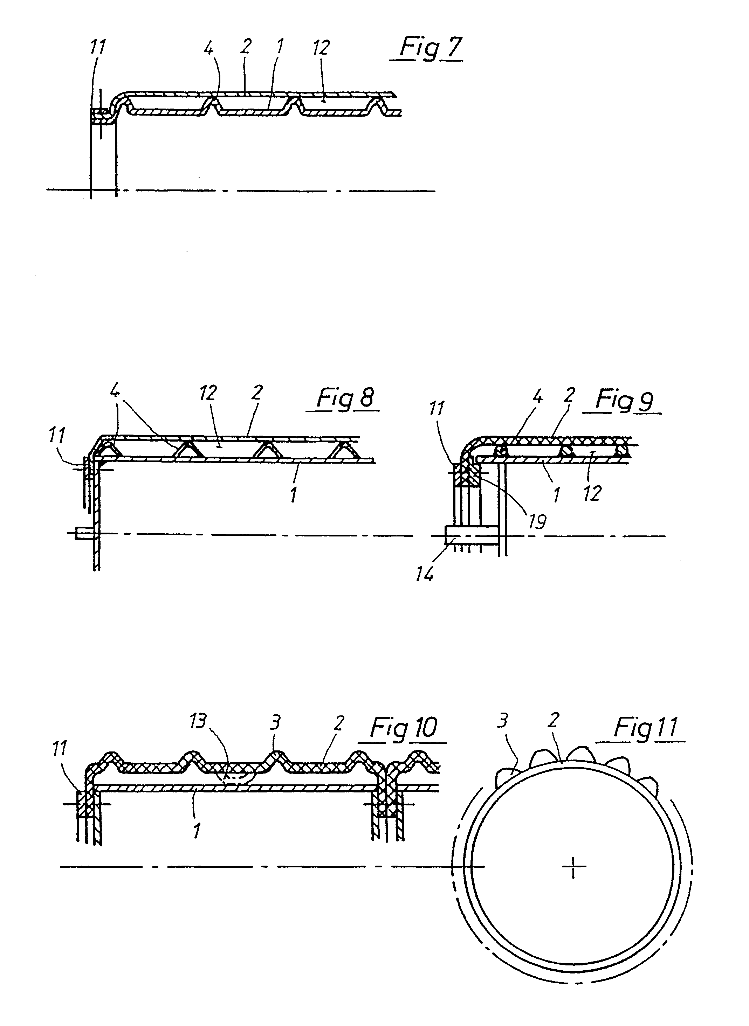

Bei dem Ausführungsbeispiel gemäß Fig. 7 ist der Mantel 2 im wesentlichen zylindrisch ausgebildet und an seinen Randbereichen über einen Spannring oder ein Spannelement 11 an dem Traggerüst 1 gehalten.

Das Traggerüst 1 ist ebenfalls im wesentlichen zylindrisch ausgebildet und weist mehrere radial nach außen weisende Stützringe 4 auf, gegen welche der Mantel 2 im unverformten Zustand anliegt. Die Stützringe 4 sind gegeneinander beabstandet und bilden einen Freiraum 12, in welchen der Mantel 2 bei einer Verformung eindrückbar ist.

Das in Fig. 8 gezeigte Ausführungsbeispiel ähnelt dem Ausführungsbeispiel gemäß Fig. 7 und unterscheidet sich darin, daß die Stützringe 4 als separate Elemente ausgebildet sind, welche mit dem zylindrischen Traggerüst 1 verbunden, beispielsweise verschweißt sind, während bei dem Ausführungsbeispiel gemäß Fig. 7 die Stützringe 4 durch Verformung des Traggerüsts 1 erhalten werden.

Das Ausführungsbeispiel gemäß Fig. 9 unterscheidet sich von dem in Fig. 8 gezeigten Ausführungsbeispiel darin, daß die Stützringe 4 in Form von mit dem zylindrischen Traggerüst 1 verschweißten Ringen runden Querschnitts ausgebildet sind.

Bei dem in Fig. 9 gezeigten Ausführungsbeispiel ist es möglich, den Mantel 2 mittels eines Spannrings oder Spannelements 11 an einem Ring 19 zu befestigen, welcher relativ zu dem rohrförmigen Traggerüst 1 verdrehbar ist, so daß Relativbewegungen zwischen dem Mantel 2 und dem Traggerüst 1 ermöglicht werden. Der Ring 12 ist in nichtdargestellter Weise, beispielsweise mittels Speichen an einer Achse 14 der Ackerwalze gelagert, an welcher auch das Traggerüst 1 befestigt ist. Bei dieser Ausgestaltungsform erweist es sich als besonders vorteilhaft, daß Spannungen in dem Mantel 2 vermieden werden, welche dann auftreten könnten, wenn dieser an seinen axialen Endbereichen fest mit dem Traggerüst 1 verbunden ist und, bedingt durch geringfügige Durchmesserunterschiede zwischen dem Traggerüst 1 bzw. den Stützringen 4 und dem Mantel 2 relativ zu dem Traggerüst 1 bewegt wird. Derartige Spannungen könnten unter ungünstigen Umständen zu einer Zerstörung des Mantels 2 führen.

Bei Abrollen der in den Fig. 7 bis 9 gezeigten Ackerwalzen werden die jeweiligen Bereiche des Mantels 2 so verformt, daß diese zwischen benachbarte Stützringe 4 eindringen, die Walze insgesamt somit vorspringende, ringartige Wulstbereiche aufweist, welche durch den Stützring 4 gebildet werden und Rillen im Erdboden erzeugen.

Das in Fig. 10 gezeigte Ausführungsbeispiel umfaßt, ähnlich dem Ausführungsbeispiel der Fig. 8 oder 9, eine zylindrische Traggerüstausgestaltung, an welcher der Mantel 2 gelagert ist. Dabei können über die Breite der Ackerwalze mehrere Mäntel 2, so wie in Fig. 10 gezeigt, vorgesehen sein, welche dadurch gehalten werden, daß die jeweiligen Traggerüste 1 gegeneinander verspannt werden.

Der Mantel 2 weist jeweils mehrere Ringwülste 3 auf, welche einstückig mit diesem ausgebildet sind. Bei einem Andrücken der Ackerwalze gegen das Erdreich wird der gesamte Mantel 2 gegen das Traggerüst 1 gepreßt, die Ringwülste 3 stehen jedoch weiterhin in radiale Richtung hervor und erzeugen somit die Rillen in dem Ackerboden.

In Fig. 10 ist weiterhin in gestrichelter Weise ein Stützelement 13 dargestellt, welches zusätzlich an dem Mantel 2 angebildet sein kann und dazu dienen kann, eine gleichmäßige Verformung des Mantels 2 beim Abrollen der Ackerwalze auf dem Erdboden zu gewährleisten.

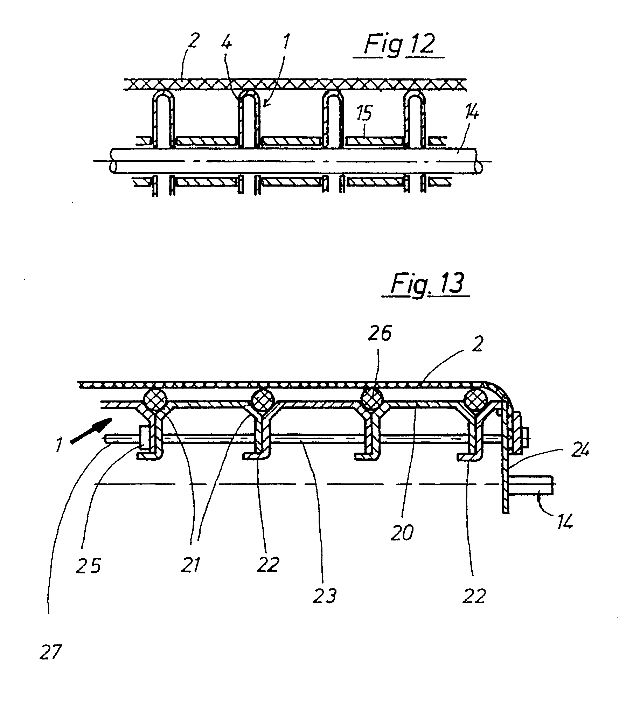

Weiterhin kann bei dem in Fig. 10 gezeigten Ausführungsbeispiel die Ringwulst 3 so ausgebildet sein, daß sich diese nicht über den gesamten Umfang der Ackerwalze erstreckt, sondern wellenförmig profiliert ist oder in Form einer Verzahnung ausgebildet ist. Dies kann dadurch erfolgen, daß die Ringwulst 3 selbst in geeigneter Weise ausgebildet ist, siehe Fig. 11, es ist jedoch auch möglich, an dem Traggerüst 1 entsprechende Profilierungen vorzusehen.

In Fig. 12 ist ein weiteres Auführungsbeispiel dargestellt, bei welchem der Mantel 2 in Form eines glatten Zylinders ausgebildet ist, dessen Enden ähnlich wie bei den Ausführungsbeispielen der Fig. 7 bis 9 befestigt ist. Das Traggerüst 1 umfaßt mehrere Stützring-Elemente, welche im wesentlichen scheibenförmig ausgebildet sind und auf eine Achse 14 aufgesteckt sind, wobei die seitlichen Abstände über Distanzstücke 15 aufrechterhalten werden. Bei einem Abrollen dieses Ausgestaltungsbeispiels der Ackerwalze auf dem Ackerboden werden die freien Bereiche des Mantels 2 so verformt, daß diese zwischen die Stützringe 4 eindringen können.

Die Länge der Distanzstücke 15 könnte entsprechend einem gewünschten Saatreihenabstand gewählt werden, wenn Saatgut in den erzeugten Rillen abgelegt werden soll.

Das in Fig. 13 gezeigte Ausführungsbeispiel unterscheidet sich von den Ausführungsbeispielen der Figuren 7 bis 9 und 12 dadurch, daß anstelle der starren Stützringe (4) Ringelemente (26) vorgesehen sind, welche in ihrem Durchmesser vergrößerbar sind. Dies weist den Vorteil auf, daß der Mantel (2) der Ackerwalze, welcher einen größeren Innendurchmesser aufweist, als der Außendurchmesser des Traggerüstes (1) leicht montierbar ist. Nach erfolgter Montage kann der Außendurchmesser der Ringelemente (26) so vergrössert werden, daß der Mantel (2) an dem Traggerüst (1) abgestützt ist. Dies führt zu einem straffen Sitz des Mantels (2) auf dem Traggerüst (1). Bei dem Ausführungsbeispiel sind mehrere zylindrische Segmente (20) vorgesehen, welche das Traggerüst (1) bilden. Diese weisen an ihren axialen Endbereichen jeweils abgeschrägte Anlageflächen (21) auf und sind in Axialrichtung zueinander bewegbar. Dadurch ist es möglich, im Montagezustand einen Abstand zwischen den einzelnen zylindrischen Segmenten (19) vorzusehen, um einen Freiraum zu bilden, in welchen die Ringelemente (26) einbringbar sind. Nach erfolgter Montage des Mantels (2) können die zylindrischen Segmente (20) in axialer Richtung gegeneinander verspannt werden, beispielsweise unter Zuhilfenahme einzelner Schrauben oder, wie in Fig. 13 gezeigt, eines Zugankers (23), welcher an seinem Ende mit einem Gewinde (27) versehen ist, welches sich in Eingriff mit einer Mutter (25) befindet, die an einem geeigneten Segment (20) befestigt ist.

Der Mantel (2) ist an seinem Ende bevorzugterweise an einer Scheibe (24) befestigt, die mit der Achse (14) verbunden ist. Die Scheibe (24) dient gleichzeitig der Führung des Zugankers (23).

Um im Montagezustand, in welchem die einzelnen zylindrischen Segmente (20) einen axialen Abstand zueinander aufweisen, diese relativ zueinander sicher zu führen, ist bei dem Ausführungsbeispiel vorgesehen, daß jeweils einer der Schulterbereiche der zylindrischen Segmente (20) mit einem zylindrischen Bereich (22) versehen ist, welcher sich in axialer Richtung erstreckt und der Lagerung des benachbarten zylindrischen Segments (20) dient.

Die Anlageflächen (21) sind in ihrer Schrägstellung so ausgebildet, daß bei einer axialen Annäherung der einzelnen zylindrischen Segmente (20) die Ringelemente (26), welche elastisch ausgebildet sind, in radialer Richtung nach außen gedrückt werden. Um bei einer langen Ackerwalze ein gleichmäßiges Verspannen der zylindrischen Segmente und damit der Ringelemente zu ermöglichen, können mehrere Zuganker (23) vorgesehen sein, welche beispielsweise von den beiden Stirnseiten der Ackerwalze aus einschraubbar sind.

Bei den gezeigten Ausführungsbeispielen kann das Material des Mantels beispielsweise aus Gummi bestehen, wobei üblicherweise Verstärkungen, beispielsweise Textileinlagen und ähnliches vorgesehen sein können. Bei Verwendung der erfindungsgemäßen Ackerwalze in Kombination mit einer nachgeordneten Sämaschine ist es möglich, die durch die Ringwülste 3 oder die Ringrippen 5 erzeugten Rillen der Erdoberfläche zur Einführung von Saatgut zu verwenden. Dabei kann es besonders günstig sein, der Bodenwalze einen Striegel nachfolgen zu lassen, welcher auch dann günstig sein kann, wenn keine Sämaschine vorgesehen ist, um die Rillen wieder mit Erdreich aufzufüllen.

Die Erfindung ist nicht auf die gezeigten Ausführungsbeispiele beschränkt, vielmehr ergeben sich im Rahmen der Erfindung vielfältige Abwandlungs- und Modifikationsmöglichkeiten.

## Ansprüche

1. Ackerwalze mit einem starren Traggerüst (1) und einem dieses umschließenden, sich zumindest über einen Teil der Gesamtlänge der Walze erstreckenden elastischen Mantel (2), dadurch gekennzeichnet, daß der Mantel (2) zumindest in einem Teilbereich seiner Länge in radialer Richtung verformbar ausgebildet ist und daß das Traggerüst (1) mit im wesentlichen ringförmigen Stützelementen (3) zur seitlichen und/oder radialen Abstützung versehen ist.

2. Ackerwalze nach Anspruch 1, dadurch gekennzeichnet, daß der Mantel (2) mit zumindest einer radial über den Umfang der Walze vorstehenden Ringwulst (3) versehen ist.

3. Ackerwalze nach Anspruch 1, dadurch gekennzeichnet, daß das Traggerüst (1) zumindest einen radial vorstehenden, eine radiale Verformung des Mantels begrenzenden Stützring (4) umfaßt.

4. Ackerwalze nach einem der Ansprüche 1 bis 3, dadurch gekennzeichnet, daß das Traggerüst (1) in einem nicht mit dem Mantel (2) belegten Längenbereich mit einer radial vorstehenden Ringrippe (5) versehen ist.

5. Ackerwalze nach einem der Ansprüche 1 bis 4, dadurch gekennzeichnet, daß der Mantel (2) im wesentlichen in Form einer Zylinderschale ausgebildet ist.

6. Ackerwalze nach einem der Ansprüche 1 bis 5, dadurch gekennzeichnet, daß sich der Mantel (2) über die gesamte Länge der Walze erstreckt.

7. Ackerwalze nach einem der Ansprüche 1 bis 5, dadurch gekennzeichnet, daß sich der Mantel (2) nur über einen Teilbereich der Länge der Walze erstreckt und daß mehrere Mäntel nebeneinander angeordnet sind.

8. Ackerwalze nach Anspruch 7, dadurch gekennzeichnet, daß die Ringrippe (5) zwischen benachbarten Mänteln angeordnet ist.

9. Ackerwalze nach einem der Ansprüche 5 bis 8, dadurch gekennzeichnet, daß das Traggerüst (1) im wesentlichen zylindrisch ausgebildet ist und im mittleren Bereich mit einer radialen Ausnehmung (6) versehen ist.

10. Ackerwalze nach einem der Ansprüche 1 bis 9, dadurch gekennzeichnet, daß der Mantel (2) doppelwandig ausgebildet ist und an seinem mittleren, radial inneren Bereich (7) an dem Traggerüst (1) gehaltert ist.

11. Ackerwalze nach einem der Ansprüche 1 bis 9, dadurch gekennzeichnet, daß der Mantel (2) in seinem mittleren Bereich konvex radial nach außen geformt ist.

12. Ackerwalze nach einem der Ansprüche 1 bis 9, dadurch gekennzeichnet, daß der Mantel (2) im unverformten Zustand einen größeren Durchmesser als das Traggerüst (1) aufweist und zwischen dem Mantel (2) und dem Traggerüst (1) ein Freiraum (8) wechselnder Dicke gebildet wird.

13. Ackerwalze nach Anspruch 12, dadurch gekennzeichnet, daß das Traggerüst (1) zumindest über einen Teil seiner Länge mit einem vieleckigen Querschnitt versehen ist.

14. Ackerwalze nach einem der Ansprüche 3 bis 13, dadurch gekennzeichnet, daß der Stützring (4) und/oder die Ringrippe (5) Bereiche unterschiedlicher radialer Streckung aufweisen.

15. Ackerwalze nach einem der Ansprüche 1, 3, 5 bis 7, dadurch gekennzeichnet, daß das Traggerüst (1) mehrere im wesentlichen zylindrische Segmente (20) umfaßt, deren Außendurchmesser kleiner ist als der Innendurchmesser des Mantels (2) und daß im Bereich zwischen den Segmenten (20) und dem Mantel (2) Ringelemente (26) angeordnet sind, deren Durchmesser vergrößerbar ist.

16. Ackerwalze nach Anspruch 15, dadurch gekennzeichnet, daß die Ringelemente (26) in Form elastischer Ringe ausgebildet sind und daß benachbarte Segmente (20) in axialer Richtung verstellbar sind und an ihren axialen Endbereichen abgeschrägte Anlageflächen (21) zur Anlage und Aufnahme der Ringelemente (26) aufweisen.

17. Ackerwalze nach Anspruch 15 oder 16, dadurch gekennzeichnet, daß die Ringelemente (26) einen kreisförmigen Durchmesser aufweisen.

18. Ackerwalze nach einem der Ansprüche 15 bis 17, dadurch gekennzeichnet, daß die Ringelemente (26) zur axialen Verstellbarkeit aneinander geführt sind.

_Fig 1_

_Fig 2_

_Fig 3_

_Fig 4_

_Fig 5_

_Fig 6_

*Fig 7*

*Fig 8*

*Fig 9*

*Fig 10*

*Fig 11*

_Fig 12_

_Fig. 13_

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | EP-A-245648 (AMAZONEN WERKE)<br>* Spalte 13, Zeile 21 - Spalte 15, Zeile 31; Figuren 6-10 *<br>--- | 1, 3, 7, 11, 12, 14, 17. | A01B29/04 |
| X | EP-A-160612 (KUHN S.A.)<br>* Seite 8, Zeile 23 - Seite 10, Zeile 4; Figuren 4-6 *<br>--- | 1, 4, 8, 13. | |
| A | US-A-3207234 (W.R.STEWART)<br>* Spalte 2, Zeile 58 - Spalte 3, Zeile 70; Figuren 1, 7 *<br>--- | 9, 10, 11. | |
| A | EP-A-88897 (SCHMOTZER AGRARTECHNIC GMBH)<br>* Seiten 3 - 5; Figuren 3, 4 *<br>--- | 1, 2, 5. | |
| D,A | EP-A-91878 (KUHN S.A.)<br>* Seite 6, Zeile 34 - Seite 7, Zeile 13; Figur 2 *<br>------ | 5, 6. | |

RECHERCHIERTE SACHGEBIETE (Int. Cl.5 )

A01B
A01C

Der vorliegende Recherchenbericht wurde für alle Patentansprüche erstellt

| Recherchenort | Abschlußdatum der Recherche | Prüfer |
|---|---|---|
| DEN HAAG | 03 APRIL 1990 | WOHLRAPP R.G. |